Europäisches Patentamt

European Patent Office

Office européen des brevets

(11) Publication number: **0 379 241**
**A1**

## EUROPEAN PATENT APPLICATION

(21) Application number: 90200061.1

(22) Date of filing: **10.01.90**

(51) Int. Cl.⁵: **G02F 1/137**

(30) Priority: **16.01.89 NL 8900089**

(43) Date of publication of application:
**25.07.90 Bulletin 90/30**

(84) Designated Contracting States:
**CH DE FR GB IT LI NL**

(71) Applicant: **N.V. Philips' Gloeilampenfabrieken**
**Groenewoudseweg 1**
**NL-5621 BA Eindhoven(NL)**

(72) Inventor: **Heynderickx, Ingrid Emilienne**
**Joanna Rita**
**c/o INT. OCTROOIBUREAU B.V. Prof.**
**Holstlaan 6**
**NL-5656 AA Eindhoven(NL)**
Inventor: **Potma, Abel Hubertus**
**c/o INT. OCTROOIBUREAU B.V. Prof.**
**Holstlaan 6**
**NL-5656 AA Eindhoven(NL)**
Inventor: **Welzen, Theodorus Leonardus**
**c/o INT. OCTROOIBUREAU B.V. Prof.**
**Holstlaan 6**
**NL-5656 AA Eindhoven(NL)**
Inventor: **Duyx, Petrus Johannus Wilhelmus**
**c/o INT. OCTROOIBUREAU B.V. Prof.**
**Holstlaan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

(54) Liquid crystal display device.

(57) A liquid crystal display device comprising a double cell (10, 20) with opposed twist angles of the liquid crystal molecules acquires a better defined off-state and better multiplex properties if a bias voltage is applied to the second cell (20).

FIG.1

## Liquid crystal display device

The invention relates to a liquid crystal display device comprising a first cell with a first layer of liquid crystal material between a first pair of supporting plates provided with drive electrodes for presenting a range of operating voltages across said first layer of liquid crystal material, which material has a positive dielectric anisotropy and such a wall orientation and twist angle of the liquid crystal molecules that a birefringence effect occurs at the lowest operating voltage, said device comprising a second cell with a second layer of liquid crystal material between a second pair of supporting plates provided with electrodes, which material has a twist angle of the liquid crystal molecules which is opposed to that of the first layer of liquid crystal material.

Devices of this type are used in television screens but also, for example in display devices for datagraphic display or, for example as light shutters.

A device of the type mentioned above is described in EP 0,246,842. In this device, light which is polarized by a first polarizer traverses the first layer of liquid crystal material and is elliptically polarized to a greater or lesser extent, dependent on the layer thickness, the dielectric anisotropy and the twist angle. The effect of the elliptical polarization is compensated completely or partly in the second layer of liquid crystal material (or another birefringent material) with a rotation of polarization in the opposite sense. In the voltageless state complete extinction then occurs, while using a second polarizer having its direction of polarization perpendicular to that of the first polarizer.

Since this complete extinction occurs across the first layer of liquid crystal material in a voltageless state, such a device is not readily usable for given drive modes in which a given voltage across the liquid crystal layer is used as the lowest drive voltage. This is the case, for example in matrix display devices using an active drive mode in which a given threshold voltage is chosen as the lowest drive voltage, for example the voltage at the edge of the range of transition in the voltage/transmission characteristic curve where the transmission is minimal.

With a passive drive mode a value is often chosen as the lowest drive voltage which is proximate to or in the range of the voltage/transmission characteristic curve, for example a voltage value such that the transmission is 5% or 2.5% of the maximum transmission.

In both cases the associated director profile in the first liquid crystal layer has a pattern which is different from that in the voltageless state. Under otherwise equal conditions in the two cells (layer thickness, birefringence, twist angle) the elliptical polarization of the first cell is no longer compensated by the birefringence of the second layer of liquid crystal material, so that a certain residual transmission occurs at the lowest drive voltage, which is at the expense of the contrast. The voltage/transmission characteristic curve will also acquire a smaller slope, which reduces the number of lines to be multiplexed in passive display devices.

It is an object of the invention to solve this problem by adapting the compensation of the birefringence.

To this end a display device according to the invention is characterized in that a bias voltage is applied across the second layer of liquid crystal material by means of the electrodes, which bias voltage introduces a birefringence effect in the second layer of liquid crystal material, which effect is opposed and substantially equal in magnitude to that in the first layer of liquid crystal material associated with the lowest or the highest operating voltage.

The director profile in the second liquid crystal cell is now modified in such a way that the effects of birefringence in the two cells substantially eliminate each other at the selected bias voltage.

In this respect it is to be noted that EP 0,246,842 states the possibility of providing electrodes in the second cell, but this is exclusively done to inhibit colour variations due to temperature fluctuations.

For active driving, the bias voltage is preferably substantially equal to the voltage for which the transmission of the first cell is minimal. This voltage can generally be adjusted in such a way that it is substantially at the edge of the range of transition of the voltage/transmission characteristic curve.

In other cases, for example with a passive drive mode, a voltage $V_{off}$ or $V_{on}$ is chosen as the lowest or highest drive voltage in the first cell, at which the transmission is, for example 5% (2.5%) or 95% (97.5%) of the maximum transmission. In this case $V_{off}$ or $V_{on}$ is preferably also chosen for the bias voltage across the second cell (under otherwise equal conditions). The voltages $V_{off}$ and $V_{on}$ may vary with the number of lines to be multiplexed.

Although the description has so far been based on the use of layers of liquid crystal material having an equal thickness d, birefringence $\Delta n$ and twist angle $\phi$, these values may be different for the two cells. Even the optical path length $d.\Delta n$ for the two cells need not always be identical, but notably for passive display devices it may be more advantageous to choose a value for $d_2\Delta n_2$ of the second cell which is smaller than

the value for $d_1\Delta n_1$ of the first cell. In this case the bias voltage is changed, if necessary.

The two cells may alternatively have a common supporting plate.

The invention will now be described in greater detail with reference to some embodiments and the drawing in which

Fig. 1 is a diagrammatic cross-section of a device according to the invention,

Fig. 2 shows diagrammatically the transmission of a single liquid crystal layer between crossed polarizers as a function of the optical path length, while

Fig. 3 shows an associated transmission/voltage characteristic curve, and

Figs. 4 and 5 show different transmission/voltage characteristic curves for a device according to Fig. 1 at different values of the compensation voltage across the second cell.

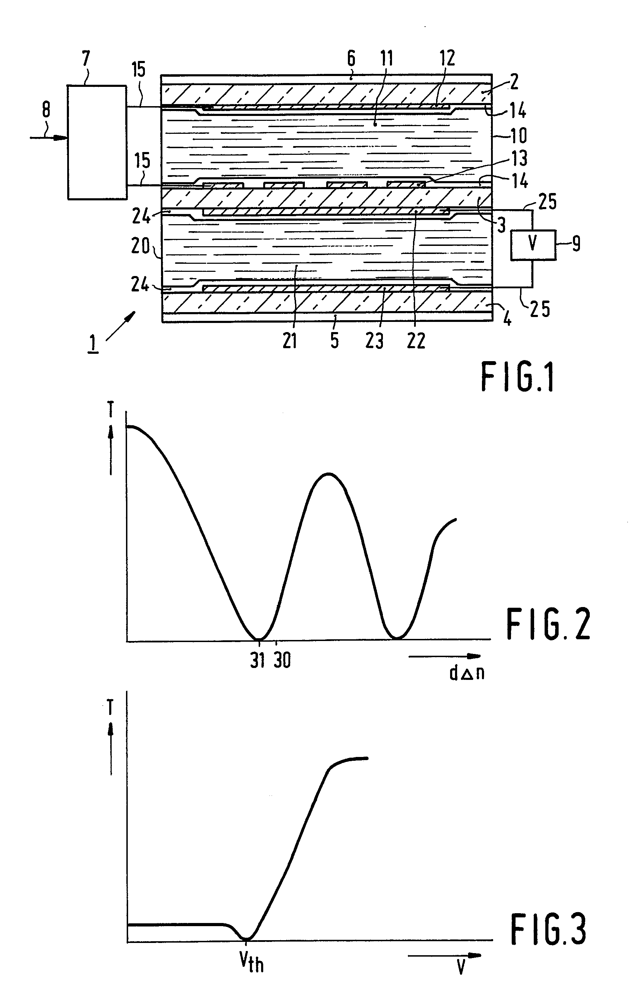

The display device 1 of Fig. 1 comprises a first display cell 10 with a layer 11 of liquid crystal material having a positive dielectric anisotropy between two transparent supporting plates 2, 3. Electrodes 12, 13 which define, for example a matrix of pixels, are arranged on the supporting plates 2, 3 at the side of the liquid crystal material. The pixels may be driven via switching elements and drive electrodes (active drive); alternatively, the pixels may be determined by overlapping portions of track-shaped electrodes and may then be directly provided with selection signals and data signals (passive drive). These drive voltages are obtained, for example by means of a drive circuit 7, which converts incoming information (TV signals, information about datagraphic symbols etc.) into the said drive voltages which are applied to the electrodes 12, 13 via connection lines 15. Layers 14 of an insulating material which, in this embodiment, also serve as orienting layers are provided on the electrodes 12, 13. The layers 14 give the liquid crystal molecules of a cholesteric material an angular twist $\phi_1$ (for example, 270°) at a voltage of 0 Volt across the electrodes 12, 13.

The device also comprises a second cell 20 with a second layer of liquid crystal material 21 between two transparent supporting plates 3, 4, which material also has a positive dielectric anisotropy. The supporting plate 3 is chosen to be common for the two cells 10, 20. Electrodes 22, 23 which in this embodiment substantially cover the entire surface area of the supporting plates 3, 4 are provided on these supporting plates. The electrodes 22, 23 are connected to a voltage source 9 via connection lines 25. Layers 24, both for insulation and orientation are present on the electrodes 22, 23. The liquid crystal material 21 and the orienting effect of the layers 24 are chosen to be such that in the case of a voltage of 0 Volt across the electrodes the liquid crystal molecules acquire an angular twist $\phi_2$ which is substantially equal and opposed to $\phi_1$ ($\phi_2 = -\phi_1$). The cells 10 and 20 are present between polarizers 5 and 6.

One of the properties of a layer of birefringent crystal material is its power of birefringence. An incident ray of light is split up into an ordinary ray which propagates through the medium at a speed $c/n_o$ and an extraordinary ray which propagates at a speed $c/n_e$. The difference $\Delta n = (n_e - n_o)$ and the thickness d of the layer of liquid crystal material jointly define the optical path length difference $d\Delta n$. Dependent on the wavelength $\lambda$ and this product $d.\Delta n$ the ordinary and extraordinary rays have a given phase difference after they have traversed the layer of liquid crystal material. This difference can be detected by observing the layer of liquid crystal material between two crossed or parallel polarizers.

Fig. 2 shows how the transmission varies as a function of $d\Delta n$ in the case of parallel polarizers, and at a given wavelength. The direction of the directors of the liquid crystal material at the side of the incident light is chosen to be parallel to the direction of polarization of the incident light. At $d\Delta n = 0$ there is no phase difference so that all the light is passed. With an increasing $d\Delta n$ the phase difference increases and consequently the transmission decreases until it becomes entirely zero and subsequently increases again.

In practice a liquid crystal display cell comprises a layer of liquid crystal material whose $d\Delta n$ value does not coincide with one of the minimum values (for example the first value) in the characteristic curve of Fig. 2. Notably for television applications the $d\Delta n$ value is chosen to be slightly higher, for example at the point 30 in Fig. 2. However, this implies that a small transmission occurs (between parallel polarizers) at a voltage of 0 Volt (see Fig. 3). With an increasing voltage across the layer of liquid crystal material the molecules are directed in accordance with the applied field, so that $d\Delta n$ slightly decreases and at the value $V_{th}$ (Fig. 3) $d\Delta n$ reaches the value of zero (point 31 in Fig. 2). If the voltage decreases further, $d.\Delta n$ quickly decreases and the display cell traverses the range of transition in its transmission/voltage characteristic curve.

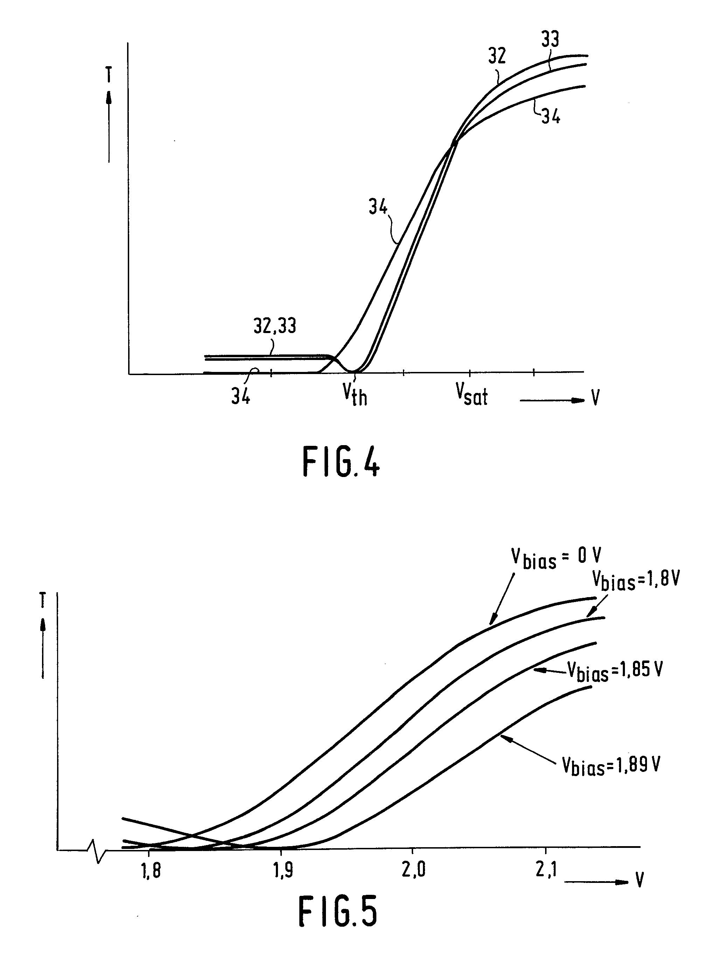

A similar transmission/voltage characteristic curve of Fig. 3 is shown as curve 32 for white light in Fig. 4. The two other curves represent the transmission/voltage characteristic curves of the device according to Fig. 1, in which V is the voltage across the electrodes 22, 23 and T is the transmission of the complete device 1.

In most applications the display cell 10 is driven from a given minimum voltage. For example, for television applications a range between the voltage $V_{th}$ (Fig. 3) and a given maximum voltage $V_{sat}$ is

chosen. For pixels of the display cell 10 the optical path length $d_1 \Delta n_1$ at the minimum voltage is then no longer equal to the optical path length $d_2 \Delta n_2$ for the display cell 20 in the voltageless state (with an equal thickness of the material and $\Delta n_1 = \Delta n_2$, or such a choice of material and thickness that $d_1 \Delta n_1 = d_2 \Delta n_2$). The birefringence introduced in display cell 10 is no longer compensated in display cell 20 so that transmission occurs at $V_{th}$. Curve 34 illustrates this situation. The electrodes 22, 23 of display cell 20 are not provided with a voltage in this case.

If a bias voltage $V_{bias}$ having a value of approximately $V_{th}$ is applied to the second display cell 20 by means of the voltage source 9, the effect of birefringence in the display cells 10, 20 is substantially equal but opposed ($d_1 \Delta n_1 = d_2 \Delta n_2$, $\phi_1 = -\phi_2$) and complete extinction occurs for all wavelengths at this voltage (curve 33 in Fig. 4). The bias voltage is hardly found to influence the further variation of the transmission/voltage characteristic curve as compared with that for a single display cell. Moreover, it appears that in colour applications the colour coordinates of intermediate states are better adjustable.

Fig. 4 also shows that the transmission/voltage characteristic curve for a display device according to the invention (curve 33) has a steeper slope than that for a similar device in which the display cell 20 does not have a given bias voltage. This means that the multiplex degree for such a device is higher or, conversely, the contrast is greater at a given multiplex degree than without the use of a bias voltage. The bias voltage need not necessarily be equal to $V_{th}$, but it is also dependent on the chosen values of the on-voltage $V_{on}$ and the off-voltage $V_{off}$ associated with a given transmission, and on the values $d\Delta n$ of the cell 10, 20.

This is illustrated with reference to the results stated below for a display device in which $\phi_1 = 180^\circ$ and $d_1 = d_2 = 6 \mu m$ and for the liquid crystal material ZLI 2293.

Fig. 5 shows the transmission/voltage characteristic curves for different values of the bias voltage ($V_{bias}$) across the cell 20. For $V_{off}$ the voltage value is chosen at which the transmission is 5% or 2.5% of the maximum transmission. With a multiplex ratio of 200 a value $V_{on} = 1.073 \, V_{off}$ in accordance with

$$\frac{V_{on}}{V_{off}} = \sqrt{\frac{\sqrt{n} + 1}{\sqrt{n} - 1}}$$

(Alt and Pleshko)
is associated therewith. With the aid of the curves of Fig. 5 the contrast is then determined as

$$\frac{\text{Transmission } (V_{on})}{\text{Transmission } (V_{off})}$$

| $V_{off}$ at T = 5% of $T_{max}$ | | |
|---|---|---|
| $V_{bias}$ cell 20 | $V_{off}$ (V) | Contrast |
| V = 0 V | 1,82 | 8,4 |
| V = 1,80 V | 1,87 | 9,1 |
| V = 1,85 V | 1,90 | 9,2 |
| V = 1,89 V | 1,94 | 9,0 |

| $V_{off}$ at T = 2,5% of $T_{max}$ | | |
|---|---|---|
| $V_{bias}$ cell 20 | $V_{off}$ (V) | Contrast |
| V = 0 V | 1,80 | 14,2 |
| V = 1,80 V | 1,85 | 17,0 |
| V = 1,85 V | 1,88 | 17,2 |
| V = 1,89 V | 1,92 | 17,2 |

The invention is of course not limited to the embodiments described, but several variations within the scope of the invention are possible to those skilled in the art. For example, for the angle $\phi$ values other than 180° and 270° are possible, for example, 90° and 360° or intermediate values. The angle $\phi_1$ need not always be exactly equal to $-\phi_2$, but possible deviations may be largely compensated by a different position of the polarizers or variations in $d_1 \Delta n_1$ and $d_2 \Delta n_2$. Also at equal angles $\phi_1$, $\phi_2$ it is not necessary for $d_1 \Delta n_1$ and $d_2 \Delta n_2$ to be always substantially equal, but the choice of a value $d_1 \Delta n_1 > d_2 \Delta n_2$ may lead to an improvement of the contrast. Moreover, the electrodes 22, 23 may be divided into portions, for example if requirements are imposed on a part of the display device (for example, relating to colour, contrast or multiplex ratio), which requirements are completely different from those imposed on the other part.

Although the foregoing description deals with a device driven in transmission, the invention can also be used for a reflective display device. In this case the second cell 20 (compensation cell) is present on the viewing side and the polarizer 6 is replaced, for example by a combined reflector/polarizer with a direction of polarization which is parallel to that of the polarizer 5. If crossed polarizers are used, a higher brightness can be obtained in this configuration by choosing $V_{bias}$ equal to $V_{on}$.

## Claims

1. A liquid crystal display device comprising a first cell with a first layer of liquid crystal material between a first pair of supporting plates provided with drive electrodes for presenting a range of operating voltages across said first layer of liquid crystal material, which material has a positive dielectric anisotropy and such a wall orientation and twist angle of the liquid crystal molecules that a birefringence effect occurs at the lowest operating voltage, said device comprising a second cell with a second layer of liquid crystal material between a second pair of supporting plates provided with electrodes, which material has a twist angle of the liquid crystal molecules which is opposed to that of the first layer of liquid crystal material, characterized in that a bias voltage is applied across the second layer of liquid crystal material by means of the electrodes, which bias voltage introduces a birefringence effect in the second layer of liquid crystal material, which effect is opposed and substantially equal in magnitude to that in the first layer of liquid crystal material associated with the lowest or the highest operating voltage.

2. A display device as claimed in Claim 1, characterized in that the voltage for which the transmission of the total device is substantially minimal or maximal is chosen as a bias voltage.

3. A display device as claimed in Claim 1 or 2, characterized in that the thickness d and the birefringence difference $\Delta n$ for the two cells are substantially identical.

4. A display device as claimed in Claim 3, characterized in that the first cell is driven in an active drive mode and the bias voltage is equal to the minimum drive voltage which is applied across the first layer of liquid crystal material for the purpose of the active drive.

5. A display device as claimed in any one of the preceding Claims, characterized in that it comprises mutually perpendicular polarizers.

6. A display device as claimed in any one of Claim 1 to 4 for reflective uses, characterized in that the device is provided with a polarizer and a polarizer-reflector, the second cell being present on the viewing side.

7. A display device as claimed in any one of the preceding Claims, characterized in that the optical path length $d_2 \Delta n_2$ of the second cell is at most equal to the optical path length $d_1 \Delta n_1$ of the first cell.

8. A display device as claimed in any one of the preceding Claims, characterized in that the two cells have a common substrate.

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 312 297 (FUJITSU LTD) <br> * Abstract; page 3, column 1, line 55 - column 2, line 54; figures 1,2 * <br> --- | 1-8 | G 02 F 1/137 |
| D,A | EP-A-0 246 842 (SEIKO EPSON CO.) <br> * Abstract * <br> --- | 1-8 | |
| A | SID INTERNATIONAL SYMPOSIUM, 24th-26th May 1988, Digest of Technical Papers, vol. XIX, first edition, pages 53-56, SID, Playa del Rey, CA, US; H. KOH et al.: "A 960 x 240 pixel multicolor supertwisted-nematic display" <br> * Page 54, column 1, lines 30-58; figure 2 * <br> --- | 1-8 | |
| A | SID INTERNATIONAL SYMPOSIUM, 24th-26th May 1988, Digest of Technical Papers, vol. XIX, first edition, pages 416-419, article 21.6, SID, Playa del Rey, CA, US; H. WATANABE et al.: "Full-color LCD with neutralized STN (NTN)" <br> * Page 416, column 1, lines 25-57; figure 4(b) * <br> --- | 1-8 | TECHNICAL FIELDS SEARCHED (Int. Cl.5) <br><br> G 02 F |
| A | EP-A-0 284 372 (SHARP K.K.) <br> * Page 2, lines 39-57 * <br> ----- | 1-8 | |

The present search report has been drawn up for all claims

| Place of search | Date of completion of the search | Examiner |
|---|---|---|
| THE HAGUE | 12-04-1990 | GALANTI M. |

EPO FORM 1503 03.82 (P0401)